# EUROPÄISCHE PATENTANMELDUNG

(11) **EP 0 896 852 A2**
(43) Veröffentlichungstag der Anmeldung: **17.02.1999**
(21) Anmeldenummer: 98106669.9
(22) Anmeldetag: 11.04.1998
(51) Int. Cl.: B23K 35/02, B23K 11/00

(54) **Mutter zur Verbindung mit einem Zylinder**

(30) Priorität: 23.05.1997 DE 29709097 U
(71) Anmelder: TEXTRON VERBINDUNGSTECHNIK GmbH & Co. OHG, 56567 Neuwied (DE)
(72) Erfinder: Billmann, Peter, 90455 Nürnberg (DE)
(74) Vertreter: KOHLER SCHMID + PARTNER

(57) **Zusammenfassung**

Um bei einer Mutter 2 zur Verbindung mit einem im Querschnitt etwa kreis- oder ovalförmigen Zylinder 1, die Schweißoperation zu vereinfachen und die Notwendigkeit einer Nachbearbeitung auszuschließen, ist an einer oder beiden Stirnflächen 4 derselben ein als Schweißring 5 ausgebildeter Ansatz vorgesehen, welcher der Mantelfläche 7 des Zylinders 1 angepaßt ist.

## Beschreibung

Die Erfindung bezieht sich auf eine Mutter zur Verbindung mit einem im Querschnitt etwa kreis- oder ovalförmigen Zylinder. Um eine Mutter mit den üblichen ebenen Stirnflächen mit einem entsprechenden Zylinder zu verbinden war es bisher erforderlich, eine sehr große Schweißnaht vorzusehen und außerdem mußten besondere Vorrichtungen zur Festhaltung der Mutter in der gewünschten Lage verwendet werden. Des weiteren waren erhebliche Nacharbeiten an der Schweißnaht erforderlich.

Die Aufgabe der vorliegenden Erfindung ist es, die Schweißoperation zu vereinfachen und die Notwendigkeit einer Nachbearbeitung auszuschließen. Erfindungsgemäß wird dies durch einen an einer oder beiden Stirnflächen der Mutter als Schweißring ausgebildeten Ansatz erreicht, welcher der Mantelfläche des Zylinders angepaßt ist. Dadurch wird zunächst eine formgenaue Anlage der Mutter am Außendurchmesser des Zylinders gewährleistet. Außerdem ergibt sich eine sehr sichere und qualitativ hochwertige Schweißung. Ebenso ist eine mechanische Vorbehandlung des Zylinders für die Schweißarbeiten nicht mehr erforderlich und Nacharbeiten können völlig entfallen.

Vorzugsweise ist der Schweißring elliptisch ausgebildet und weist einen gleichmäßig umlaufenden Querschnitt auf. Die Mutter besteht nach einem weiteren Merkmal der Erfindung aus einem Stück mit dem Schweißring und wird durch Massivumformung gebildet, so daß sich eine einfache Herstellungsweise für eine derartige Mutter ergibt. Als besonders günstige Querschnittsform für den Schweißring hat sich ein Dreieck erwiesen, wobei seine Spitze am Zylindermantel anliegt und die Dreieckschenkel insbesondere abgerundet in die Mutter übergeben.

Die Zeichnung zeigt ein Ausführungsbeispiel der Erfindung. Es stellen dar:

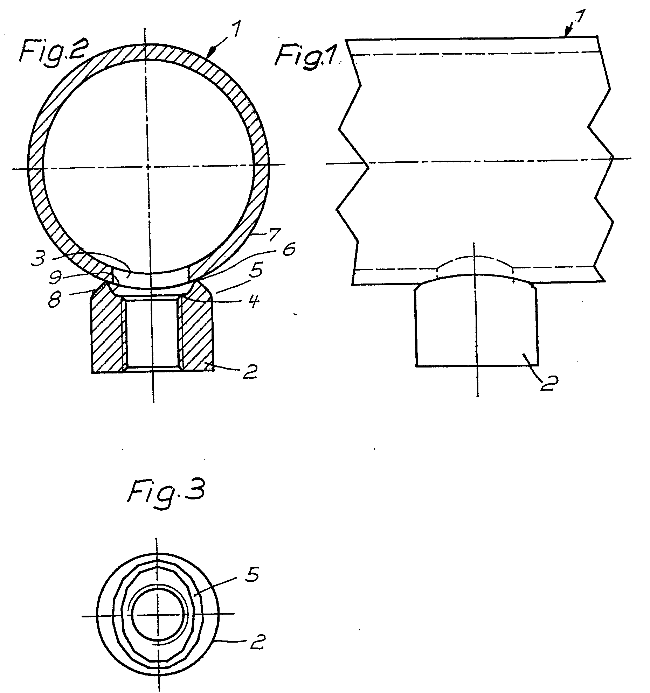

- Fig. 1: einen abgebrochenen kreisförmigen Zylinder mit an seiner Mantelfläche angesetzter Mutter,
- Fig. 2: einen Querschnitt nach Figur 1 und
- Fig. 3: eine Draufsicht auf die Mutter mit Schweißring.

An dem im Querschnitt kreisförmigen Zylinder 1 ist eine Mutter 2 angesetzt, welche mit dem Zylinder 1 verschweißt werden soll. Dabei weist der Zylinder 1 an der Ansatzstelle der Mutter 2 eine Durchgangsöffnung 3 auf, damit eine nicht dargestellte Schraube durch die Mutter 2 hindurchgeschraubt werden kann. An der Stirnfläche 4 der Mutter 2 ist ein als Schweißring 5 ausgebildeter Ansatz angeordnet, welcher im Querschnitt etwa dreieckförmig gestaltet ist, wobei die Spitze 6 an der Mantelfläche 7 des Zylinders 1 anliegt und die Schenkel 8 und 9 abgerundet in die Mutter 2 übergehen. Der Schweißring 5 ist der Mantelfläche 7 des Zylinders 1 angepaßt, elliptisch geformt und weist umlaufend einen gleichmäßigen Querschnitt auf. Die sicher an der Mantelfläche 7 anliegende Mutter 2 kann nun auf einfache Weise mit dem Zylinder 1 verschweißt werden.

## Patentansprüche

1. Mutter (2) zur Verbindung mit einem im Querschnitt etwa kreis- oder ovalförmigen Zylinder (1), gekennzeichnet durch einen an einer oder beiden Stirnflächen (4) derselben als Schweißring (5) ausgebildeten Ansatz, welcher der Mantelfläche (7) des Zylinders (1) angepaßt ist.

2. Mutter nach Anspruch 1, dadurch gekennzeichnet, daß der Schweißring (5) elliptisch ausgebildet ist.

3. Mutter nach einem oder beiden der vorhergehenden Ansprüche, dadurch gekennzeichnet, daß der Schweißring (5) mit der Mutter (2) aus einem Stück besteht und durch Massivumformung ohne weitere Nachbearbeitung gebildet ist.

4. Mutter nach einem oder mehreren der vorhergehenden Ansprüche, dadurch gekennzeichnet, daß der Schweißring (5) im Querschnitt etwa dreieckförmig ausgebildet ist, wobei seine Spitze (6) am Zylindermantel (7) anliegt und die Dreiecksschenkel (8,9) insbesondere abgerundet in die Mutter (2) übergehen.

5. Mutter nach einem oder mehreren der vorhergehenden Ansprüche, dadurch gekennzeichnet, daß der Schweißring (5) einen gleichmäßig umlaufenden Querschnitt aufweist.
